# EUROPEAN PATENT APPLICATION

(11) **EP 2 629 459 A2**
(43) Date of publication of application: **21.08.2013**
(21) Application number: 13155313.3
(22) Date of filing: 14.02.2013
(51) Int. Cl.: H04L 12/40, H04L 12/46, H04L 29/08, B64D 11/00

(54) **Avionics full-duplex switched ethernet network**

(30) Priority: 15.02.2012 US 201213397071
(71) Applicant: GE Aviation Systems LLC, Grand Rapids, MI 49512-1991 (US)
(72) Inventor: Bobrek, Pavlo, Bradenton, FL 34209 (US)
(74) Representative: Williams, Andrew Richard

(57) **Abstract**

An avionics full-duplex switched ethernet data network that includes multiple hosts, with each of the multiple hosts having at least one communication port and with an End System establishing communication protocol between the multiple hosts.

## Description

### BACKGROUND OF THE INVENTION

ARINC 664 Part 7 defines the functionality of switches and end systems for use in an avionics network, such as an Avionics Full Duplex Switched Ethernet (AFDX) network. In an ARINC 664, Part 7 AFDX network, each End System (ES) or terminal node assumes the role of a Network Interface Controller (NIC), capable of maintaining communication ports (COM ports) for messages written and read by multiple applications which share a host processor. These COM ports serve as the host processors interface to the AFDX network through which the hosts communicate. COM ports are configured with data structures and physical resources including memory, queues and a prescribed fractional allocation of the bandwidth of the interface used for data transfers through the network. The data message written into a COM port is sent through the network using a virtual link (VL) whose traffic is shaped not to exceed its Bandwidth Allocation Gap (BAG), which is defined in terms of a maximum number of bytes being transferred in a fixed time interval.

Current existing End Systems, which are physically a separate component from the host processor, are designed with host interfaces tailored for short, intra-board connection, e.g., PCI Bus. Consequently, the End System is located proximate to the host and the transmit services provided by an End System cannot be shared among hosts distributed throughout the avionics network. The short distance enables the bandwidth of the End System's host interface to support COM port message transfers up to 8 Kbytes, as specified in Section 3.3.1.1.2 of ARINC 664 part 7 (published on June 27, 2005) within the time allotted to a host application running in a time-sliced operating system like ARINC 653. Presently, ARINC 664 part 7 only specifies the use of 10 Mbit/second and 100 Mbit/second links to the network with a maximum frame size of 1518 bytes. Thus, an End System must be able to accept and queue COM port message sizes up to 8192 bytes from a host processor, encapsulate these in a UDP data gram, fragment large messages if needed, and encapsulate them into their allocated maximum frame sizes for transmission over the AFDX network. To meet network design constraints on transfer latency and inter-frame time jitter, the End System performs traffic shaping commensurate with an application's maximum bandwidth allocation and multiplexes frames from multiple applications over its network link commensurate with latency and inter-frame jitter requirements.

### BRIEF DESCRIPTION OF THE INVENTION

In one embodiment, an avionics full-duplex switched ethernet data network (AFDX) includes multiple hosts, with each host having at least one communication port, at least one VES physically separate from the hosts, a virtual link at least some of the multiple hosts extending from at least one of the communication ports of one of the hosts to one or more communication ports one or more of the other hosts, which collectively define multiple virtual links, wherein the virtual links pass through the VES.

### BRIEF DESCRIPTION OF THE DRAWINGS

In the drawings:

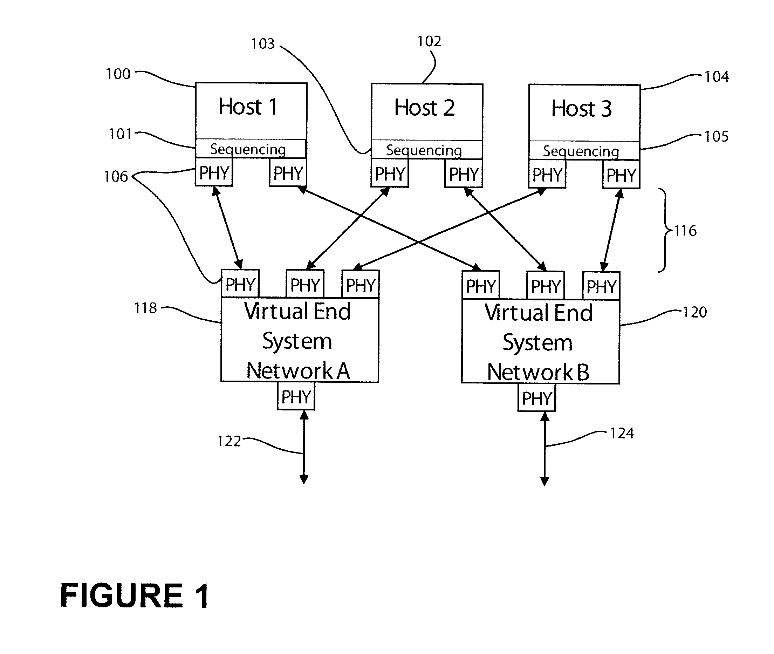

Figure 1 is a schematic representation of a topology of an avionics communications network configured to operate according to one embodiment of the present invention. In the embodiment of Figure 1, the Virtual End System (VES) may be located remotely to one or more hosts to which it is connected to serve and each host may be connected to more than one VES in order to interface to a different network. This enables the host to replicate critical data on separate, redundant networks to enhance availability.

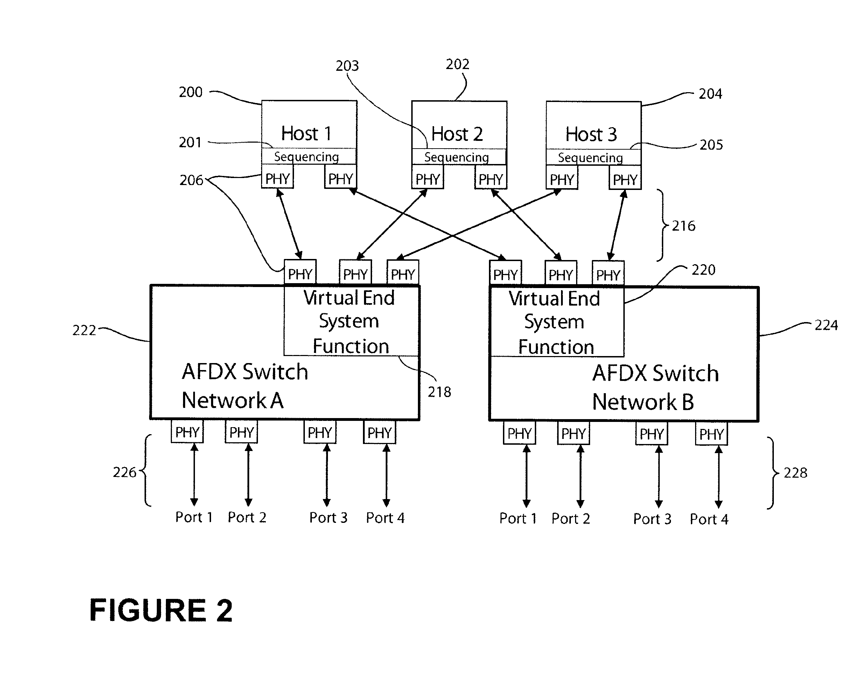

Figure 2 is a schematic representation of a topology of an avionics communications network configured to operate according to another embodiment of the present invention.

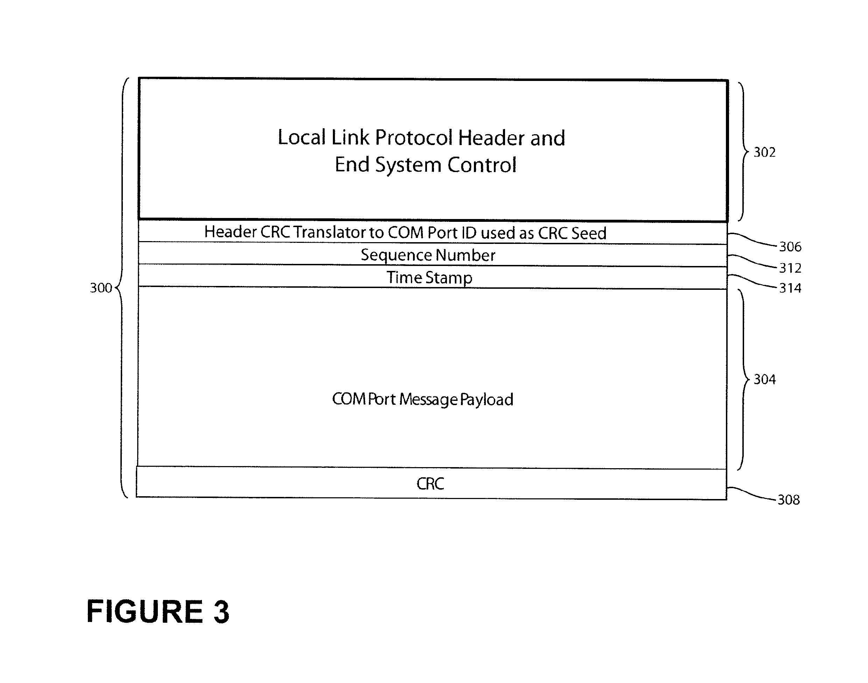

Figure 3 is a schematic representation of a communications message transmitted between a Host processor and a Virtual End System of Figure 1 and Figure 2.

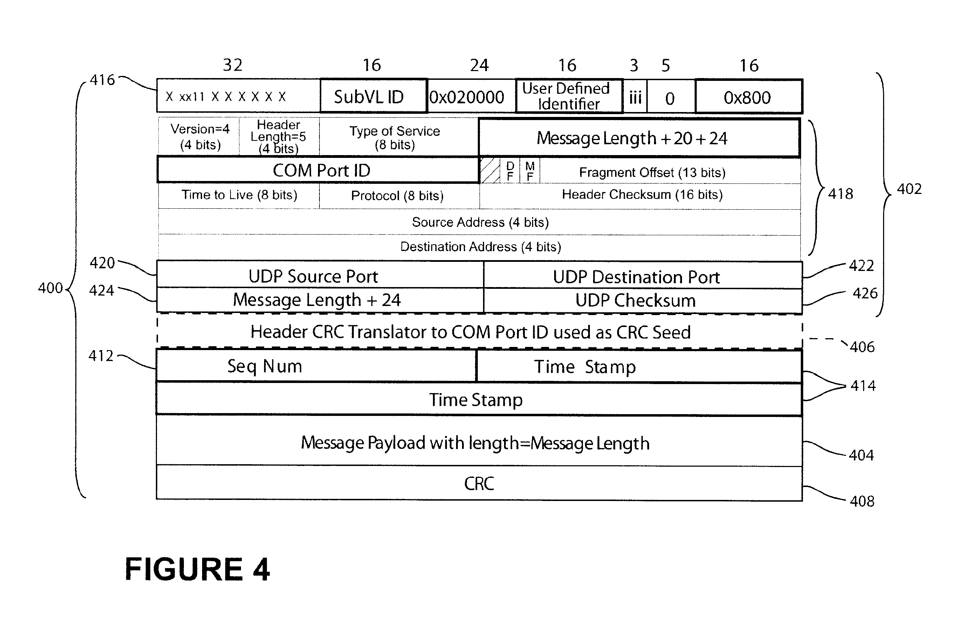

Figure 4 is one example of an embodiment of a protocol consistent with Figure 3 wherein the link between the Host and the VES is chosen to be a gigabit Ethernet link over which COM port messages are conveyed using Ethernet jumbo frames.

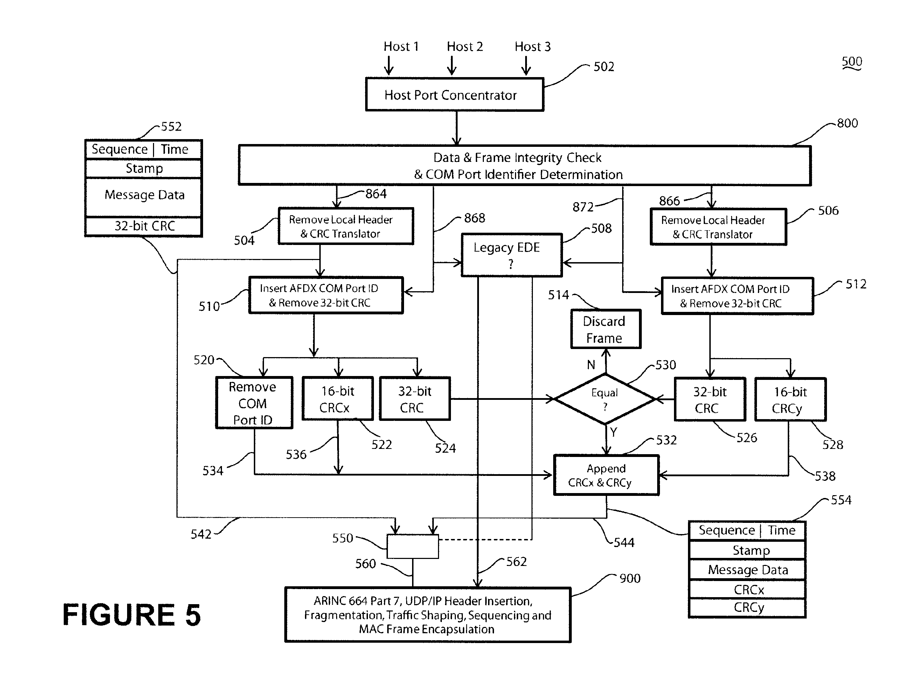

Figure 5 shows an embodiment of the VES transmit process, which includes the ability to interoperate with a legacy receiving end system which uses an error detection encoding scheme such as the one implemented within the Rockwell-Collins end systems, an example of which is described in U.S. Patent No. 5,170,401. It also includes the simpler, preferred error detection encoding scheme which relies on the CRC translator such as 306, 406 and 628, as computed, for example, by the method shown in 720 and requires far less processing to achieve superior error protection.

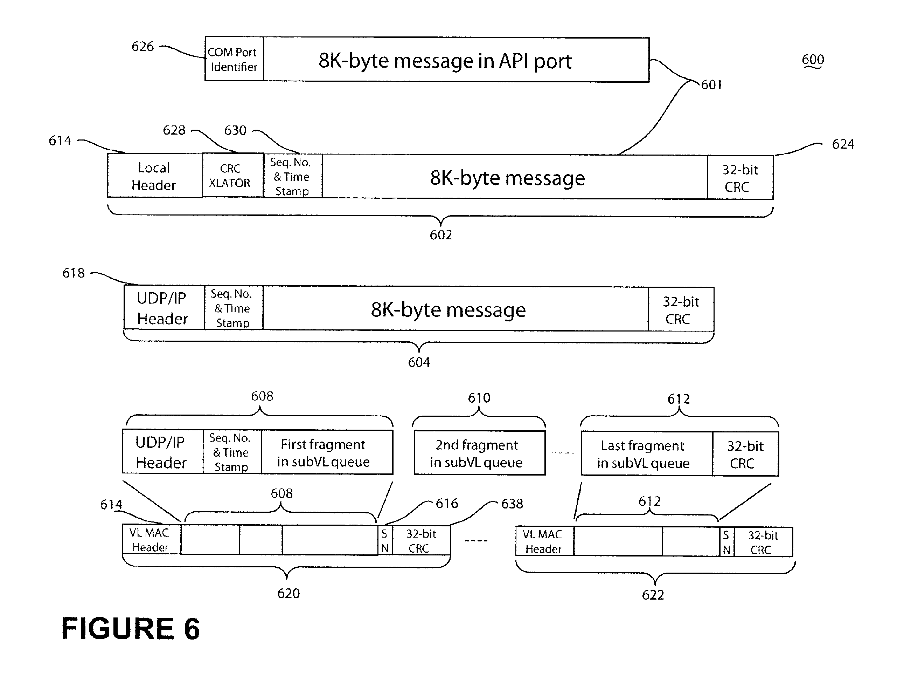

Figure 6 shows how the COM port message which contains a COM Port Identifier is encapsulated into a jumbo frame by the host with a local protocol header and a CRC translator. The CRC translator insures that the CRC checksum of the jumbo frame with the local protocol header is identical to the CRC that would result had the COM Port Identifier been used in place of the local protocol header to compute the CRC. Once the VES receives the jumbo frame of Figure 4 with a local protocol header and CRC translator, the VES removes the jumbo frame header and the CRC translator, encapsulates the message in a UDP/IP datagram, fragments the message, and performs MAC encapsulation for transmission over the AFDX network. At the far end of the network, the receiver knows the value of the COM Port Identifier, which it can use to verify message integrity (sans the original local protocol header sourced by the transmitting host) and to generate a different local protocol header for the COM port jumbo frame message sent to the receiving host.

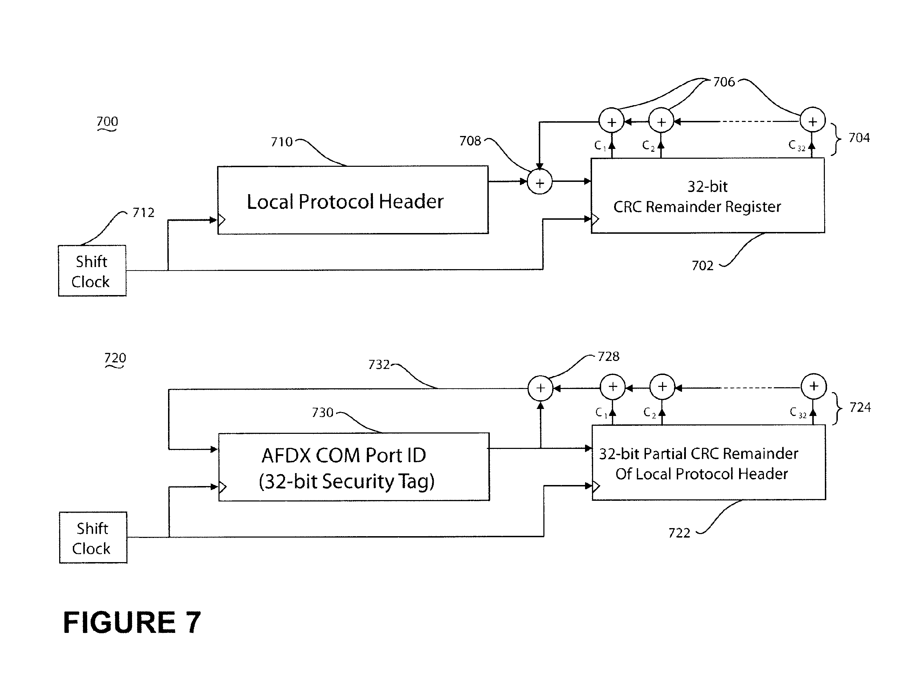

Figure 7 is one embodiment of a means to generate the translator word, for example 306 or 406, which translates the partial CRC remainder of the local protocol header to equal the partial CRC remainder that would result had a Security Tag been used in place of the local protocol header in the CRC calculation. In this embodiment, the COM port identifier 626 serves as a Security Tag whose value must be known by the receiving AFDX end system and inserted as the message header in order to obtain a valid CRC checksum result. A partial CRC checksum for the entirety of the local protocol header is first computed in 700. Then, in 720, using this partial CRC checksum and the AFDX COM port identifier 626, the value of the CRC translator word is computed.

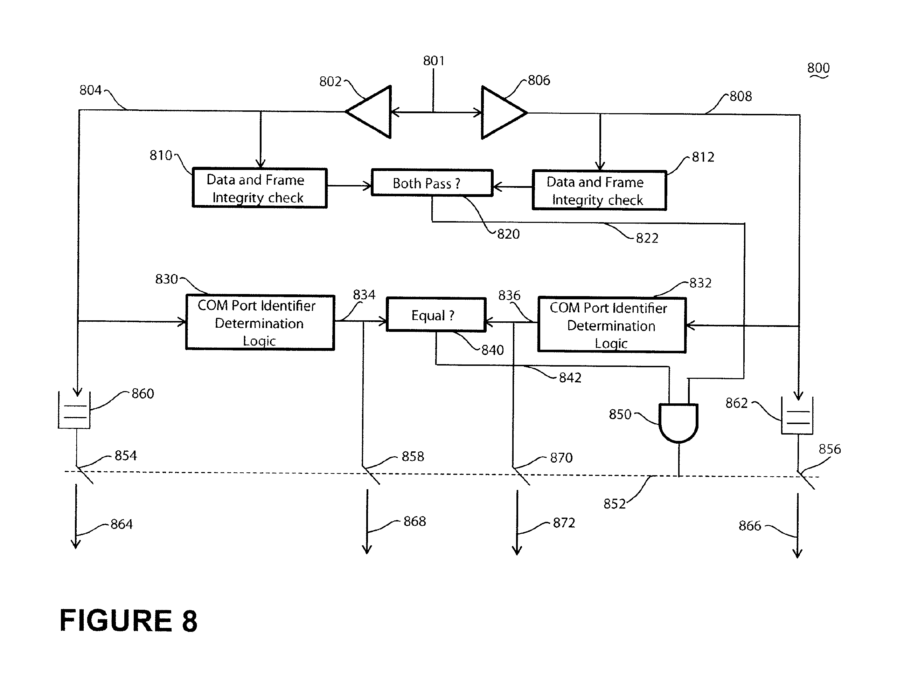

Figure 8 depicts a highly reliable method of performing a data frame integrity check and COM port identifier determination. A slightly different embodiment of this is used for both ingress frames bound for the network and egress frame received from the network. The differences pertain to the methods employed to check data and frame integrity and determine the COM port identifier.

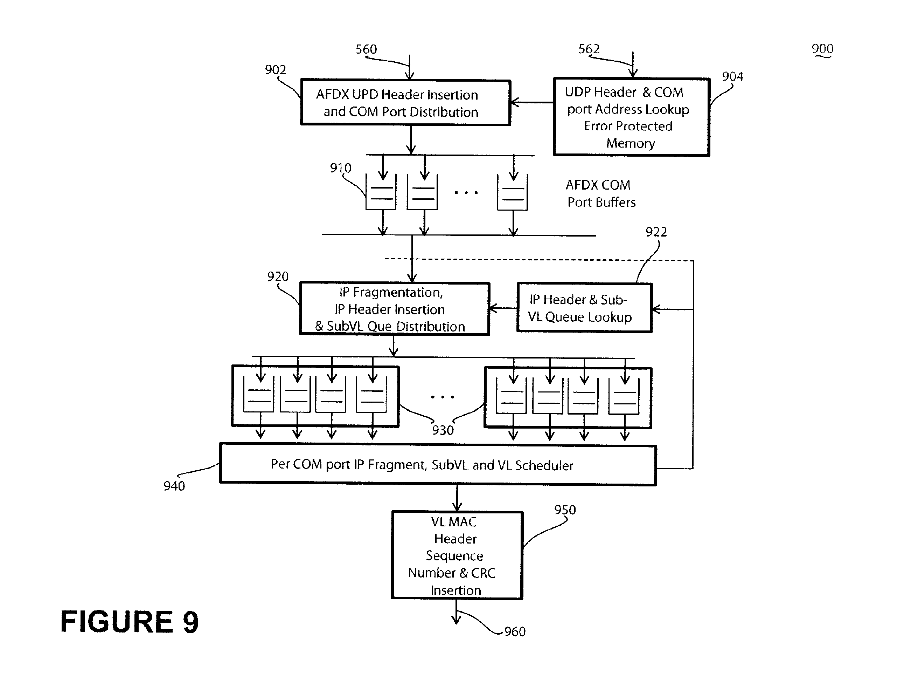

Figure 9 depicts a method to encapsulate and, optionally, fragment COM port messages for transmission over an AFDX network as specified by ARINC 664 part 7.

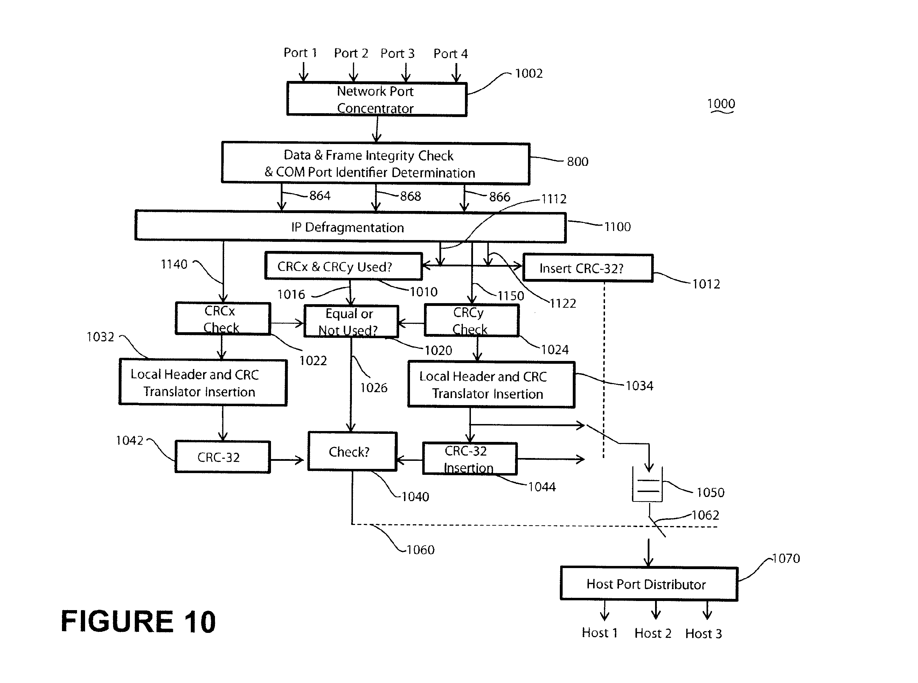

Figure 10 depicts the VES receive process which is able to receive frames transmitted using either the legacy error detection encoding (EDE), such as the Rockwell Collins end system, the improved error detection encoding (IEDE) of the present invention, or the normal integrity method outlined in ARINC 664 part 7.

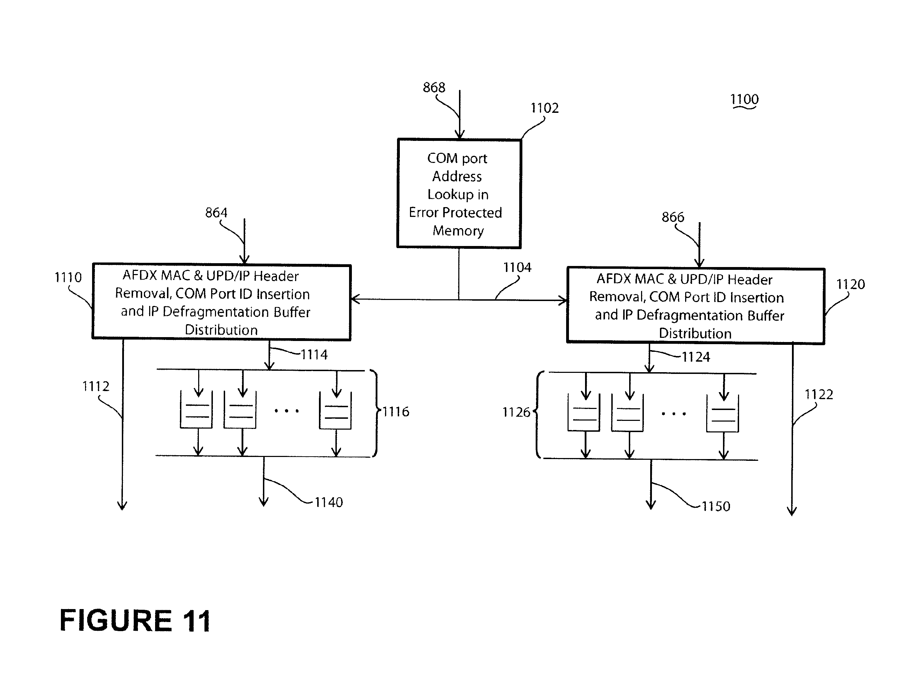

Figure 11 depicts an embodiment of a process for IP defragmentation.

### DESCRIPTION OF EMBODIMENTS OF THE INVENTION

In the following description, for the purposes of explanation, numerous specific details are set forth in order to provide a thorough understanding of the technology described herein. It will be evident to one skilled in the art, however, that the exemplary embodiments may be practiced without these specific details. In other instances, structures and device are shown in diagram form in order to facilitate description of the exemplary embodiments.

The exemplary embodiments are described below with reference to the drawings. These drawings illustrate certain details of specific embodiments that implement the module, method, and computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of method steps that may be implemented in one embodiment by a program product including machine-executable instructions, such as program code, for example in the form of program modules executed by machines in networked environments. Generally, program modules include routines, programs, objects, components, data structures, etc. that perform particular tasks or implement particular abstract data types. Machine-executable instructions, associated data structures, and program modules represent examples of program code for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configuration, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

An exemplary system for implementing the overall or portions of the exemplary embodiments might include a general purpose computing device in the form of a computer, including a processing unit, a system memory, and a system bus, that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

Figure 1shows one embodiment of the present invention in which three avionics Host processors 100, 102, and 104 share two remotely located Virtual End Systems 118 and 120. Three hosts connection to each Virtual End System (VES) is shown merely by way of example. To provide for enhanced availability, in case of network failure, it is common practice for an avionics system to have redundant networks over which identical messages are communicated. Figure 1, assumes there are two redundant ARINC 664 part 7 networks, with VES 118 communicating over Network A using link 122 and VES 120 communicating over Network B using link 124. Communication over links 122 and 124 conforms to the physical, electrical and protocol specified in the ARINC 664 standard. Each Host communicates with an End System on each network using high-speed serial links 116, whose data rate significantly exceeds that of the network links 122 and 124 so that a Host may transfer COM port messages whose frame size is greater than or equal to the frame sizes configured for a COM port's virtual link on the ARINC 664 network. Each Host and VES transmits and receives data messages over the serial links through physical layer devices (PHYs), for example, Host 100 and VES 118 communicate over the link between them using PHY pair 106.

It is not a requirement of the embodiments of the invention that a host communicate with a VES on more than one network and a Host whose function is not critical may communicate with one VES over one network. It is desirable to keep track of reception of duplicate messages transmitted and received over multiple networks or a missing message in a sequence of messages over one network, for example, to enable identification or discard of a duplicate message, or to indicate that a message in a sequence of messages was lost, depending on the needs of the application. For this purpose each Host 100, 102, and 104, has a Sequencing function 101, 103, and 105, respectively, which stamps transmitted messages belonging to each COM port with a sequence number and checks the sequence number of received messages against a history of sequence numbers for that COM port. It should be noted that an aspect of this invention is that Hosts 100, 102, and 104 may or may not be located on the same card or in the same chassis and, furthermore, VES 118 and 120 may be located on a different card in the same chassis as either Hosts 100, 102 and 104 or they may be remotely located in a different chassis or standalone units.

Referring now to Figure 2, which shows an alternate embodiment of the present invention in which three avionics Host processors 200, 202, and 204 share two remotely located Virtual End Systems 218 and 220 which physically reside in AFDX switches 222 and 224, respectively. The three hosts connection to each Virtual End System (VES) is shown merely by way of example. It will be understood that the Virtual End System (VES) is not limited to provide services to the three hosts and instead may accommodate any number of hosts. It is common practice for an avionics system to have redundant networks over which identical messages are communicated and Figure 1 assumes there are two redundant ARINC 664 part 7 networks, with VES 218 through switch 222 communicating over Network A using links 226 and VES 220 through switch 224 communicating over Network B using links 228.

In Figure 2, each switch shows four network links by way of example, it being understood that each switch may have any number of links to its respective network. Communication over links 226 and 228 conforms to the physical, electrical and protocol specified in the ARINC 664 standard. Each Host communicates with an End System on each network using high-speed serial links 216, whose data rate significantly exceeds that of the network links 226 and 228 so that a Host may transfer COM port messages whose frame size is greater than or equal to the frame sizes configured for a COM port's virtual link on the ARINC 664 network. Each Host and VES transmits and receives data messages over the serial links through physical layer devices (PHYs), for example, Host 200 and VES 218 communicate over the link between them using PHY pair 206. It is not a requirement of this invention that a host communicate with a VES on more than one network and a Host, whose function is not safety critical, may communicate with one VES in one switch which serves one network. It is desirable to keep track of reception of duplicate messages transmitted and received over multiple networks or a missing message in a sequence of messages over one network, for example, to enable identification or discard of a duplicate message, or to indicate that a message in a sequence of messages was lost, depending on the needs of the application. For this purpose each Host 200, 202, and 204, has a Sequencing function 201, 203, and 205, respectively, which stamps transmitted messages belonging to each COM port with a sequence number and checks the sequence number of received messages against a history of sequence numbers for that COM port. It should be noted that an aspect of this invention is that Hosts 200, 202, and 204 may or may not be located on the same card or in the same chassis and, furthermore, Switch 222 with VES 218 and Switch 224 with VES 220 may be located on a different card in the same chassis as either Hosts 200, 202 and 204 or they may be remotely located in a different chassis or standalone units.

Figure 3 illustrates one embodiment of a protocol frame data structure 300 to communicate COM port messages between a Host and a VES. The particular protocol frame data structure that is used in any particular embodiment depends on the specific high-speed physical layer devices used to transmit and receive over links 116 or 216. For example, a particular physical layer device (PHY), such as the PHY pair 106 of Figure 1 or PHY pair 206 of Figure 2, may define the content of specific fields of the Local Link Protocol Header 302, which also communicates control information, for example, to associate the COM port message with a particular memory allocated for it or with an ARINC 664 virtual link over which the contents of that message are to be communicated. Figure 3 illustrates the use of a Header CRC Translator 306, which is used to force a partial CRC remainder taken over the Protocol Header 302 to a particular value. This enables the receiver of the message to substitute a known single-word security tag associated with a particular COM port, in place of the multi-word Header 302, which helps to guarantee end-to-end COM port message integrity and guards against source impersonation, without the receiver having to know the instantaneous content of the Protocol Header 302 at the transmitter. Sequence Number 312 is added by the Host's Sequencing function, for example, Sequencing functions 101, 103, and 105 as described in regard to Figure 1 or Sequencing functions 201, 203 and 205 as described in regard to Figure 2. A time stamp 314 is added to the message so that the receiver may determine how old the message is. The CRC is computed over the entire header 302, translator 306, sequence number 312, time stamp 314, and payload 304. The receiver does not need to receive Local Link Protocol Header 302 because it knows the CRC partial remainder that is forced as a CRC seed value by translator 306 for the balance of the message.

Referring now to Figure 4, which shows one embodiment of a local protocol frame 400 which might be used if, by way of example, jumbo frames are transmitted over gigabit Ethernet to transport COM port messages between Host and VES. In this embodiment, 402 is the Local Link Protocol and End System Control header. This header consists of an IEEE 802.3 (or Ethernet) header 416, which is the Local Protocol Header, and the End System control consists of an IP header 418 together with the UDP Source Port 420, UDP Destination Port 422, UDP message length 424, and UDP checksum 426, which together identify the memory allocated to store data for that COM port, the sub-VL queue into which AFDX-formatted data will be placed for transport, and the AFDX UDP, IP and MAC headers that will be used for transport over the AFDX network. In the embodiment of Figure 4, the CRC 408 is calculated over the entire frame 400. Using Ethernet jumbo frames enables the Message Payload 404 to accommodate the maximum COM port message length of 8192 bytes. The polynomial used by CRC 408 is the CRC-32 specified for use by IEEE 802.3 enabling it to conveniently be calculated by the gigabit Ethernet PHY devices which link the Host with the VES.

Referring now to Figure 5, which shows an embodiment of a transmit process 500, which is used to receive the frame 300 or 400 and prepare it for transmission over the AFDX network. In this embodiment, a Host Port Concentrator 502 enables simultaneously receiving frames from multiple hosts, for example, over a high-speed data link such as a gigabit Ethernet link. The concentrator 502 can be configured to order the passing of frames to the remainder of the processes on a first-come basis or on a prioritized basis. The data frame output of the concentrator is then processed by Data and Frame Integrity Check and COM Port Identifier Determination Logic 800 that outputs identical copies of the verified COM port message frame on outputs 864 and 866 and identical copies of the COM Port Identifier 868 and 872. The embodiment 500 offers two distinct means of error detection encoding of a COM port message, for example 304 of Figure 3 or 404 of Figure 4, together with sequence number, for example 312 of Figure 3 or 412 of Figure 4, and time stamp, for example 314 of Figure 3 and 414 of Figure 4. The selection of which error detection encoding scheme is used is made by Process 508 based on examination of the COM port identifiers 868 and 872 received from process 800. One means of error detection encoding relies on use of a CRC translator, for example 306 of Figure 3 or 406 of Figure 4, and the 32-bit CRC calculated by the source host, for example 308 of Figure 3 or 408 of Figure 4. When this method of error detection encoding is used, process 500 may use a single COM port message frame output 864 of process 800 to be used by process 504, which removes the local protocol header, for example 302 of Figure 3 or 402 of Figure 4, and removes the CRC translator, for example 306 of Figure 3 or 406 of Figure 4. This results in frame structure 552 on output 542 of process 504, which is selected by 550 to be the input 560 to the ARINC 664 part 7 UDP/IP Header Insertion, Fragmentation, Traffic Shaping, Sequencing and MAC Frame Encapsulation Process 900. In addition, an error-detection-encoded copy 562 of the COM port identifiers 868 and 872 is made available to process 900.

Referring again to the embodiment of the VES transmit process shown in Figure 5, to describe the alternate distinct means of error detection encoding supported by this embodiment, which is the legacy error detection encoding (EDE) implemented on Rockwell-Collins end systems, an example of which is described in U.S. Patent No. 5,170,401. Whether the preferred error detection encoding or the legacy error detection encoding is used is determined by an examination of one copy 868 of the COM Port Identifier, in case the COM Port Identifier is itself sufficiently error detection encoded, or both copies 868 and 872 otherwise. Process 508 determines that the COM Port Identifier has no error, for example by a check of the error detection encoding, if any, or by a direct comparison of 868 and 872. If there is an error in the COM port identifier, the frame is discarded. If there is no error in the COM port Identifier, process 508 determines whether the COM port to which the present message belongs is configured to use the preferred error detection encoding or the legacy error detection encoding (EDE) used by Rockwell-Collins end systems. To achieve the legacy EDE encoding, Process 500 uses both copies of the COM port message frame 864 and 866. First the local protocol header and CRC translator are removed by processes 504 and 506, for example 302 and 306 of Figure 3 or 402 and 406 of Figure 4. Next processes 504 and 506 insert their copy of the COM port identifier received on 868 and 872, respectively, at the beginning of the resulting COM port message frame received from 504 and 506, respectively, to replace the local protocol header and CRC translator that were removed. Processes 504 and 506 also remove the 32-bit CRC from the end of the COM port message frame, for example 308 of Figure 3 and 408 of Figure 4. The resulting frame starting with the COM port identifier but without the 32-bit CRC, is passed through four different CRC generators, 522, 524, 526, and 528, implemented in different pieces of hardware in order to make the make legacy EDE encoding immune to a single fault. This is advisable since the 32-bit CRC protecting the original frame received from the host is to be removed and replaced. As a part of legacy EDE encoding, the COM port identifier used by 522, 524, 526, and 528, in their CRC calculation is removed by process 520. If the process 530 determines that the 32-bit CRC calculated by 524 and 526 on different copies of the same data were identical, process 532 appends two 16-bit CRCs to the frame on output 534 of process 520. Specifically, process 532 appends a copy of 16-bit CRCx, obtained from output 536 of process 522 and process 532 also appends a copy of 16-bit CRCy, obtained from output 538 of process 528. The output 544 of process 532 has the frame structure 554 which is selected by 550 to be the input 560 to the ARINC 664 part 7 UDP/IP Header Insertion, Fragmentation, Traffic Shaping, Sequencing and MAC Frame Encapsulation Process 900. In addition, an error-detection-encoded copy 562 of the COM port identifiers 868 and 872 is made available to process 900.

Referring now to Figure 6, which shows a result of the sequence of processes 500 of Figure 5 on an 8 Kbyte frame 400 of Figure 4 in time order from top to bottom. The Host includes a COM Port Identifier 626 with the frame and writes it into a memory location reserved for the COM port used for the frame's transfer. Another hardware or software process in the Host uses the COM port identifier to select local protocol header 614, for example 302 in Figure 3 and 402 in Figure 4, which is inserted at the start of the frame; calculate a CRC translator 628, for example 306 in Figure 3 and 406 in Figure 4; increment and insert a COM port message sequence number and time stamp 630, for example 312 and 314 in Figure 3 and 412 and 414 in Figure 4, respectively; and calculate and append a CRC checksum 624, for example 308 in Figure 3 and 408 in Figure 4. The message 602 is received by the VES. Upon verifying correct reception and COM port identification, the local protocol header 614 and CRC translator 628 are removed and replaced with the UDP/IP header 618 selected for that COM port in process 900 of Figure 5. In an embodiment, the original CRC checksum 624 remains with the frame to ensure end-to-end COM port message transport integrity. Alternatively, to interoperate with legacy end systems, such as the Rockwell-Collins end system, configured to operate with legacy error detection encoding (EDE), the 32-bit CRC 624 may be replaced with two 16-bit CRC checksums, CRCx 536 and CRCy 538 as shown in frame format 554. The AFDX COM port message 604 is stored in one of the COM port buffers 910 by process 902 and fragments are extracted during IP fragmentation by process 920. By way of example, Figure 6 shows the first IP message fragment 608, a second IP message fragment 610, and the last IP message fragment 612, it being understood that there may be multiple message fragments between the second message fragment 610 and the last message fragment 612. It further being understood that if the message 604 were shorter, there could be just one message fragment or two message fragments. The message fragments output by the fragmentation process 920 are placed into one of the sub-VL queues 930 assigned to the AFDX COM port with which they are associated. The fragments are read out of the queue by process 940, which ensures that sub-VL queues are read in a round-robin fashion for transmission over their associated VL and further ensures that time between transmissions of VL frame is greater than or equal to its configured BAG. Process 950 adds a VL-specific MAC header 614, VL sequence number byte 616, and a 32-bit CRC checksum 638. By way of example, the MAC encapsulation of the first frame fragment 608 into a MAC frame 620 is shown in Figure 6. By further way of example, the MAC encapsulation of the last frame fragment 612 into a MAC frame 622 is shown in Figure 6, it being understood that there could be multiple frame fragments between the first MAC frame 620 and last MAC frame 622. It being further understood that if the COM port message 604 were short enough, a single frame fragment might be encapsulated and the entire message 604 might be transmitted into the network using a single MAC frame.

Figure 7 shows several processes for determining the value of the CRC translator word. The purpose of the CRC translator word is to enable the local protocol header to be substituted by a COM Port identifier (or security tag) at the receiver and for the original CRC computed using the local protocol header to be equal to the CRC computed with the COM Port Identifier 626 substituted for the Local Protocol Header. The CRC translator, for example, enables the protocol header 302 and CRC translator 306 in Figure 3 or the protocol header 402 and CRC translator 406 in Figure 4 to be removed and replaced with a COM Port Identifier known to both the transmitter and receiver without invalidating the original CRC computed using the local protocol header at the host. Furthermore, to protect against hardware fault, the COM Port Identifier may itself, at any point in the data path, be error protected with an error detection and correction code. In the embodiment shown in Figure 7, there are two separate processes 700 and 720. The process 700 computes the partial CRC remainder of the local protocol header. In process 700, the CRC is computed using a linear feedback shift register (LFSR) 702 where the CRC polynomial is encoded by selecting delay taps 704 of the shift register, which are summed with modulo-2 adder circuits 706 and further summed with the input data bits with another modulo-2 adder 708. The process 700 begins by initializing the LFSR 702 to a known value, for example all zeros, and placing the entire local protocol header into another shift register 710 whose output is connected to the modulo-2 adder 708. Next, both shift registers 702 and 710 are clocked with the same shift clock 712 until the last bit of the protocol header is added by 708 and shifted into LSFR 702 at which time the shift clock 712 is terminated. The resulting value in LFSR 702 is the partial CRC remainder generated by the local protocol header. Next, process 720 is executed. In process 720, the shift register 710, whose length is equal to the length of the entire local protocol header, is replaced a 32-bit shift register 730. Furthermore, in process 720, the taps 724 of LFSR 722 are identical to the taps 704 of LFSR 702 of process 700; however, unlike process 700, in process 720, the output of shift register 730 feeds the input of LFSR 722 directly. Furthermore, the output of shift register 730 feeds a modulo-2 adder 728 which adds the modulo-2 sum 736 of the taps 724 to the output of shift register 730 and the output of modulo-2 sum 728 is shifted into 32-bit shift register 730. Process 720 begins by copying the partial CRC computed by process 700 into LFSR 722 and with 32-bit shift register 730 being initialized with the 32-bit COM Port Identifier value assigned to a particular COM port. Next, shift clock 734 is activated for 32 clock cycles, until the last bit of the COM Port Identifier is transferred from shift register 730 into LFSR 722, which completes process 720. Shift register 730 now includes the CRC translator word.

Referring now to Figure 8, which depicts one embodiment of a general Data and Frame Integrity Check and COM Port Identifier Determination Process 800. Using different logic for the data frame and integrity check processes 810 and 812, and for the COM port identifier determination 830 and 832, enables different instances of the process 800 to be used for both ingress and egress frame processing. Therefore, the paradigm of the process 800 is included in the description of both the VES transmit and receive processes of the present invention. In the embodiment shown in Figure 8, a received frame 801 is replicated onto two physically separate data paths 804 and 808 using buffers 802 and 806 respectively, to increase immunity against a single fault. Each path 804 and 808 serves as an input to identical duplicated logic the data frame and integrity check processes 810 and 812 and for the COM port identifier determination 830 and 832. While the data and frame integrity processes 810 and 812 and the COM port determination processes 830 and 832 proceed, a duplicate copy of the frame is stored in separate buffers 860 and 862, pending confirmation of identical results by the duplicated logic. If the data and frame integrity checks 810 and 812 pass 820 and the COM Port Identifier Determination 830 and 832 produce identical results 840, AND gate 850 enables the frames stored in 860 and 862 as well as the COM port identifiers 834 and 836 to become available for subsequent processing through switches 854, 856, 858 and 870. Otherwise, the frame is discarded. In this embodiment, the duplicate data paths 804 and 808, duplicate data buffers 860 and 862, and duplicated integrity check 810 and 812, duplicate COM Port ID Determination 830 and 832, are provided to enable detection of data path, logic and memory faults. Similarly, the duplicate data outputs 864 and 866 provide a subsequent process the opportunity to detect data faults and duplicate COM port identifier outputs 868 and 872 can be used by a subsequent process to detect misidentification of the COM port to which the frame belongs. For example, the duplicated data outputs 864 and 866, as well as the duplicated COM port identifier outputs 868 and 872, are all used by process 500. An alternate embodiment may use error detection encoding of the frame and error detection encoding of the bits used for COM port identification in the local protocol header of the frame, for example 302 of Figure 3 or 402 of Figure 4, in order to achieve the desired degree of protection of the data and COM port identifier, so as to obviate one or more duplications of 802, 804, 810, 830, 860, 854, 858, 864 and 868 by 806, 808, 812, 832, 862, 856, 870, 866 and 872, respectively. For example, if the COM port identifier is error detection encoded in the local protocol header 402, then the output 834 of COM Port Identifier Determination Logic 830 may also be error detection encoded, which enables one copy of the COM port identifier 868 to be sufficiently protected from error, so that only one copy of the COM port identifier is needed by a subsequent process, for example, process 1100.

Referring now to Figure 9, which depicts an embodiment of the standard ARINC 664 Part 7 UDP/IP Header Insertion, Fragmentation, Traffic Shaping, Sequencing, and MAC Frame Encapsulation process 900. An error detection encoded COM port identifier 562 is used to obtain a UDP header and COM port buffer address for the COM port message received on 560. Process 902 performs UDP header insertion and the writing of the COM port message to its reserved AFDX COM port buffer within the set of AFDX COM port buffers 910. Scheduler 940 controls the reading of IP fragments from COM port buffers 910, the insertion of the proper IP header 920, onto each fragment, and the transfer of a fragment with its IP header to its assigned sub-VL queue. Each VL has up to four sub-VL queues. Whenever any of the four sub-VL queues is non-empty and the per-VL, inter-frame bandwidth allocation gap time has been exceeded, the scheduler 940 may transmit an available frame from a sub-VL queue belonging to the VL. In case there are multiple sub-VL queues that have a frame ready for transmission on the same VL, these are selected in round-robin fashion but with a time between transmissions of frames from the different sub-VL queues not exceeding the inter-frame BAG interval for the VL to which they belong.

Referring now to Figure 10, which depicts a receive process 1000 designed to receive the frames transmitted by process 500 of Figure 5. If the VES is embedded in an AFDX switch, as shown in Figure 2, then the AFDX switch, 222 or 224, provides the Network Port Concentrator function 1002, which concentrates the traffic received from the network over links 226 and 228, respectively. Otherwise, if the VES is a standalone function, depicted as 118 and 120 in Figure 1, with only single links 112 and 124, respectively, to each network, then the concentrator function 1002 does not exist. The Network Concentrator 1002 can be configured to order the passing of frames to the remainder of the processes on a first-come basis or on a prioritized basis. The network concentrator passes frames through a Data and Frame Integrity Check and COM Port Identifier Determination Process 800. This is an instance of the circuitry shown in Figure 8, where the logic of the Data Frame and Integrity Checkers 810 and 812, is modified to include verification that the frames received over a particular VL have contiguous sequence numbers, 616, as required by ARINC 664 part 7. The logic of 800 in Figure 8, is further modified to enable a different means of determining the COM port identifier from the network's frame header, for example 614 and 618, than might be used for frames received from the host using the local protocol header, for example 302 of Figure 3 or 402 of Figure 4. Furthermore, it is assumed that the COM port identifier output 868 of 800 in Figure 10 is error detection encoded. Once verified for integrity by process 800, two copies of the received MAC frame 864 and 866 are passed to the IP defragmentation process 1100. When defragmentation is completed, control information 1112 and 1122 is passed from process 1100 to process 1010 to indicate completion of defragmentation of a message frame in a particular receive COM port and to indicate whether the preferred or the legacy error detection encoding was used in constructing the frame by process 500 and further whether or not a 32-bit CRC needs to be computed and appended to the copy of the message frame which is to be sent to the host using a local protocol header. The insertion of a 32-bit CRC to the frame is needed if either legacy EDE were used in transmission across the network or if frames were transmitted using the normal integrity method of ARINC 664 part 7, without any additional error detection encoding enhancements.

In Figure 10, one copy of the defragmented frame output 1140 from process 1100 is passed through a CRC check which uses the polynomial for CRCx 1022 and a different copy of the defragmented frame 1150 is passed through a CRC check which uses the polynomial for CRCy 1024. Process 1100 included the requisite COM port identifier at the start of the frames 1140 and 1150 for CRCx and CRCy to be properly validated. If the frame was not transmitted using legacy EDE, output 1016 of process 1010 would force the check of the results 1020 of the CRCx and CRCy to appear valid on its output 1026, regardless, so that additional processing on the frame could continue. On the other hand if legacy EDE were used, then output 1026 would reflect the true results for the check for CRCx 1022 and CRCy. Following the CRCx check 1022 and CRCy check 1024, using the COM port identifier at the start of the frames received on 1140 and 1150 from process 1100, a local protocol header and CRC translator replaces the COM port identifier in each copy of the frame by processes 1032 and 1034. Followed by a 32-bit CRC calculation by processes 1042 and 1044. If the 32-bit CRC checks are identical, and if output 1026 of process 1020 indicates that CRCx and CRCy were either correct or not used, then the frame is eligible for transmission to the host by enabling switch 1062. Otherwise the frame is discarded. Pending the CRC checks on the defragmented frame that were performed by process 1000, the frame with the local protocol header replacing the COM port ID inserted by process 1100 was transferred into a holding buffer 1050. Process 1012 makes a determination whether it is necessary to insert a 32-bit CRC at the end of the frame. The 32-bit CRC is inserted if the frame was transmitted by a remote host which used the normal integrity of ARINC 664 part 7 without any error detection enhancement or if the transmitting host used legacy EDE requiring the replacement of CRCx and CRCy by a 32-bit CRC. Process 1044 performs the insertion of the 32-bit CRC while process 1012 determines whether or not it is to be used, inserted at the end of the frame or used to replace CRCx and CRCy. In the absence of errors, the frame received from the network, as reformatted by process 1000 is made available to the Host Port Distributor 1070 which transmits the frame to the hosts configured to receive it.

Referring now to Figure 11, which depicts the IP defragmentation process 1100. Process 1100 receives an error detection encoded COM port ID 868 and dual copies of the received MAC frame864 and 866 from process 800 to be used to reconstruct the transmitted COM port message in redundant defragmentation buffers 1116 and 1126. Processes 1102, 1110 and 1120 maintain state information for the defragmentation of several COM port messages concurrently, each COM port message being assigned its own private pair of reconstruction buffers in sets 1116 and 1126. The address of the reconstruction buffers is maintained by process 1102, while processes 1110 and 1120 remove MAC, UDP and IP headers, insert the COM port ID at the start of the first fragment of a COM port message, keep track of offset addresses within a buffer to which a fragment is to be written and ensure that each fragment is properly distributed to its reserved reconstruction buffer. Once defragmentation of a COM port message is successfully completed, this is indicated to process 1000 on control lines 1112 and 1122. Control lines 1112 and 1122 also indicate whether the COM port message was transmitted using the normal integrity of ARINC 664 part 7, the preferred error detection encoding method of the present invention, or the legacy EDE used by Rockwell-Collins end systems. The reason for maintaining dual reconstruction buffers and logic is to enable fault detection within the logic and memory circuits used for IP defragmentation.

It should be noted that a legacy end system configured to receive frames in the normal integrity mode specified in ARINC 664 part 7, without the ability to process enhanced integrity frames, can still receive frames generated by either of the enhanced integrity transmit processes supported in 500, since the words received that are used to enhance integrity, for example 308, 312, and 314 of Figure 3 or 408, 412, and 414 of Figure 4, can simply be treated as redundant data words by a normal integrity receiver. Alternatively, the VES can be configured to extract the words used for high integrity transport, for example 308, 312, and 314 of Figure 3 or 408, 412, and 414 of Figure 4, prior to transmission to a legacy end system which is only able to receive normal integrity frames.

Whether the preferred error detection encoding is used for encoding COM port messages for transmission, or the legacy EDE employed by Rockwell-Collins is used, or whether the normal integrity specified by ARINC 664 part 7, without any additional error detection encoding, is used, it remains transparent to the local protocol frame format used between Host and a Virtual End System. For example, frames transmitted over links 116 of Figure 1 or 216 of Figure 2, would be identical so long as receive process 1000 is matched to receive frames generated by transmit process 500.

A beneficial effect of the above described embodiments includes the ability to remotely locate an End System from the host, which further provides for sharing the End System's functionality and services among multiple host processors communicating over the network. One advantage of remotely locating the End System from a host and sharing the End System among multiple hosts is that each host no longer needs to have its own End System, which reduces the power, cooling requirements, and the weight of each host. Avionics subsystems are constrained in the power, weight, and cooling, which is typically allocated to their particular location on the aircraft. Consequently, the reduction in power, cooling and weight of remotely located hosts, which is enabled by the Virtual End System, is very beneficial within the aircraft environment.

The sharing of the End System potentially could result in insufficient bandwidth depending on the number of hosts sharing the End System. Fortunately, a number of physical layer technologies have evolved since the development of the ARINC 664 part 7 standard whose data transfer bandwidth is 1 Gbps or greater and which support transfer distances of 100 meters or more. Such link bandwidths enable data transfers between a host and a remotely located Virtual End System in a time which is comparable to legacy End System PCI bus host interfaces. The increased processing capability and network link bandwidths make it feasible to share the resources of an ARINC 664 part 7 End System with multiple distributed hosts which need not be physically close to one another. This further serves to reduce space, weight and power consumption.

The remote locating of the End System from the host has several benefits and aspects. For example, remote location enables a more judicious utilization and distribution of the power consumption of the avionics network. Embodiments of the invention enable the services of a remotely located ARINC 664 part 7 End System to be shared by multiple hosts by abstracting the logical details of the host-to-End-System interface. The remote manipulation of the host-End System data structures and resources is achieved using a reliable protocol which provides for configuration, status, and network data transfer. Such a remotely located End System is referred to herein as a Virtual End System (VES) since its COM port services are accessed without regard to physical location or implementation details.

An embodiment of the invention is devised to include any protocol and associated data structures which serve to virtualize the host COM port to End System COM port associations.

This End System function may be an ASIC, FPGA, a general purpose CPU, or any combination of these with network interfaces running software which performs the End System function. This remotely located End System is referred to as a Virtual End System (VES). The VES function may be physically located within an AFDX switch. A high speed data link may be between the host processor and the VES which supports the transfer of large data frames commensurate with COM port message sizes (e.g., currently 8 Kbytes).

Further, a set of processes and data structures may establish a protocol for coordinating the transfer of data between a host processor and an ARINC 664 part 7 End System. These processes and data structures enable the End System resources to be shared among multiple host processors and remotely located. From the host side, these set of processes serve to establish a set of host COM ports, a corresponding set of End System COM ports, and means to configure a connection map for data transfers among them. Furthermore, this set of processes includes the ability to transfer all information needed to completely configure the End System across the link which connects the host to the End System.

A header field may identify to which COM port a message is being written or read during a transfer between a host and a VES. A message sequence number may enable the host to concurrently interface with a VES on redundant networks to increase availability. This enables the host to transmit redundant COM port messages to the VES on each network and to manage or discard redundant COM port messages received from the redundant networks. A CRC check of COM port message may enable the receiving COM port to validate the integrity of the message. The use of a security tag, which is unique to the COM port and which is not transmitted with the message but which must be known and reproduced at the receiving COM port, may serve to ascertain the integrity of the message using a CRC check. A time tag may be included as part of the COM port message so that the receiving host can validate the age of the data.

A data word may be appended to the local protocol header, which is used to transmit the COM port message from a host to its VES, which translates the CRC value of the local protocol header to be equal to the security tag value, which is unique to a COM port. This enables the particular local protocol header to be removed during transmission and replaced with its security tag at the receiving COM port and the resulting frame will still pass a CRC check. This enhances end-to-end security because the receiving COM port logic must know the value of the security tag in order for the message to pass its final CRC check.

Further, a number of interworking processes may make the presence of the VES transparent to legacy End Systems which may connect other hosts to the ARINC 664 part 7 network and makes communication with legacy end systems transparent to the host using the VES. The interworking processes include making time management and data integrity protocols compatible with those of the legacy End System with which communication is taking place.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An avionics full-duplex switched ethernet data network AFDX comprising:
multiple hosts, with each host having at least one communication port;
at least one virtual end system VES (118,120) physically separate from the multiple hosts; and
a virtual link (116) with at least some of the multiple hosts, extending from at least one of the communication ports of one of the multiple hosts to one or more communication ports one or more of the other multiple hosts, which collectively define multiple virtual links;
wherein the virtual links pass through the VES (118,120).

2. The AFDX of claim 1, further comprising a switch (222,224) connecting at least some of the multiple hosts to form a portion of the virtual links (216).

3. The AFDX of claim 2 wherein the VES (218,220) is physically located within the switch (222,224).

4. The AFDX of any preceding claim, further comprising a high-speed data link (116) between the multiple hosts and the VES (118,120).

5. The AFDX of any preceding claim, wherein the VES comprises a communication protocol to enable sharing of the VES with the multiple hosts.

6. The AFDX of claim 5, wherein the communication protocol establishes a set of host communication ports, a set of VES communication ports, and a connection map to establish data transfers between the host communication ports via the VES communication ports, which forms part of the virtual links.

7. The AFDX of claim 6, wherein the communication protocol further comprises a frame data structure having a header with a first field to identify at least one of a writing communication port and a reading communication port.

8. The AFDX of claim 7, wherein the header further comprises a second field having a sequence number.

9. The AFDX of either of claim 7 or 8, wherein the header further comprises a third field having a CRC checksum.

10. The AFDX of any one of claims 7 to 9, wherein the header further comprises a fourth field having a security tag.

11. The AFDX of any one of claims 7 to 10, wherein the security tag is unique to the communication port and is not transmitted with the frame.

12. The AFDX of any one of claims 7 to 11, wherein the header further comprises a fifth field having a time tag.

13. The AFDX of any one of claims 7 to 12, wherein the header further comprises a sixth field having a data word that is processed to transmit the frame from the host communication port to the VES communication port, which translates the partial CRC checksum of the protocol header, which is local to the interface between the host and VES, to equal the value of the security tag, which is unique to a particular communication port.

14. The AFDX of claim 6, wherein the VES provides protocol translation to enable communication over virtual links among hosts which use at least one of EDE, IEDE, and standard ARINC 664 part 7 integrity protocols.
